# EUROPÄISCHE PATENTSCHRIFT

(11) **EP 1 082 244 B1**
(45) Veröffentlichungstag und Bekanntmachung des Hinweises auf die Patenterteilung: **05.11.2003**
(21) Anmeldenummer: 99927898.9
(22) Anmeldetag: 07.06.1999
(51) Int. Cl.: B60T 13/16, B60T 8/44

(54) **BREMSDRUCKGEBERVORRICHTUNG FÜR EINE HYDRAULISCHE FAHRZEUGBREMSANLAGE**
BRAKE PRESSURE TRANSDUCER FOR A HYDRAULIC VEHICLE BRAKE SYSTEM
DISPOSITIF GENERATEUR DE PRESSION DE FREINAGE POUR INSTALLATION DE FREINAGE HYDRAULIQUE DE VEHICULE

(30) Priorität: 05.06.1998 DE 19825110
(43) Veröffentlichungstag der Anmeldung: 14.03.2001
(73) Patentinhaber: LUCAS INDUSTRIES PUBLIC LIMITED COMPANY, Solihull B90 4LA (GB)
(72) Erfinder: DIERINGER, Werner, D-56179 Vallendar (DE); KINDER, Ralf, D-56337 Simmern (DE)
(74) Vertreter: von Hellfeld, Axel, Dr. Dipl.-Phys.
(86) Internationale Anmeldenummer: EP9903913
(87) Internationale Veröffentlichungsnummer: WO99064284

(56) Entgegenhaltungen:
- EP-A- 0 436 926
- EP-A- 0 754 607
- WO-A-98/47749
- DE-A- 1 800 633
- DE-A- 19 501 760

## Beschreibung

Die Erfindung betrifft eine Bremsdruckgebervorrichtung für eine hydraulische Fahrzeugbremsanlage gemäß dem Oberbegriff des Patentanspruchs 1. Weiterhin betrifft die Erfindung eine hydraulische Fahrzeugbremsanlage, die mit einer derartigen Bremsdruckgebervorrichtung ausgestattet ist, sowie ein Verfahren zum Betreiben einer derartigen Bremsdruckgebervorrichtung und einer damit ausgestatteten Fahrzeugbremsanlage.

Es ist allgemein bekannt, daß bei hydraulischen Fahrzeugbremsanlagen die Bremsdruckgebervorrichtung einen sogenannten Hauptbremszylinder umfasst, um einen Bremsdruck für die Radbremse zu erzeugen, der sich proportional zu der über das Betätigungselement - üblicherweise ein Bremspedal - eingeleiteten Betätigungskraft verhält. Ebenfalls ist es allgemein bekannt, die Bremsdruckgebervorrichtung auch mit einem Bremskraftverstärker auszustatten, der zur Verstärkung der über das Betätigungselement eingeleiteten Betätigungskraft eine Servokraft überlagert. Als Bremskraftverstärker hierfür kommen sowohl pneumatische Verstärker, die nach dem Unterdruckprinzip arbeiten, als auch hydraulische Verstärker, die mit einer Hydraulikpumpe arbeiten, in Betracht.

Ein solcher pneumatischer Bremskraftverstärker ist zum Beispiel aus der DE 28 45 794 C2 bekannt, während ein solcher hydraulischer Bremskraftverstärker zum Beispiel aus der DE 44 43 869 A1 bekannt ist. Sowohl der pneumatische als auch der hydraulische Bremskraftverstärker weisen eine bewegliche Wand auf, die einen inneren Gehäuseraum in zwei Kammern unterteilt, und eine Kraft über ein Übertragungselement auf den Hauptbremszylinder überträgt, wenn in Abhängigkeit von einer am Betätigungselement wirksamen Kraft die Kammern einem Druckunterschied ausgesetzt sind. Im unbetätigten Zustand sind die Kammern druckausgeglichen, so daß die bewegliche Wand keine Kraft auf das Ausgangsglied überträgt. Bei dem pneumatischen Verstärker geschieht die Herstellung des Druckunterschiedes dadurch, daß in einer Kammer mittels einer Unterdruckquelle ein Unterdruck erzeugt wird, während die andere Kammer mit Atmosphärendruck beaufschlagt wird. Demgegenüber wird bei dem hydraulischen Verstärker der Druckunterschied mittels einer Hydraulikpumpe erzeugt, deren Saugseite mit der einen Kammer und deren Druckseite mit der anderen Kammer verbunden ist, so daß die Hydraulikpumpe in Richtung von der einen Kammer zu der anderen Kammer fördert, um eine Bremskraftverstärkung zu erreichen.

Dennoch ist eine derartige hydraulische Fahrzeugbremsanlage verbesserungswürdig. So wird die volle Bremskraftverstärkung nur bei etwa 10 Prozent aller auf ein Fahrzeug bezogenen Bremsungen benötigt. Es leuchtet nun ein, daß die Auslegung der Bremskraftverstärkung für die übrigen etwa 90 Prozent der Bremsungen überdimensioniert ist. Diese Überdimensionierung bedingt den Nachteil, daß ein relativer großer Einbauraum im Kraftfahrzeug erforderlich ist, wodurch Aufwand und Kosten entstehen.

Vor allem bei Einsatz eines pneumatischen Bremskraftverstärkers besteht ein direkter Zusammenhang zwischen Verstärkerleistung und Baugröße, das heißt je größer die geforderte Verstärkerleistung ist, desto größer baut der Bremskraftverstärker. Da die geforderte Verstärkerleistung im wesentlichen vom Fahrzeuggewicht abhängt, müssen in gehobeneren Fahrzeugklassen überwiegend sogenannte Tandemverstärker - also im Prinzip zwei hintereinander geschaltete Bremskraftverstärker - eingesetzt werden, wodurch weiterer Einbauraum mehr benötigt wird. Ein pneumatischer Bremskraftverstärker hat desweiteren den Nachteil, daß im Fahrzeug eine Unterdruckquelle bereitgestellt werden muss. Zwar kann bei einem mit Ottomotor ausgerüsteten Fahrzeug prinzipbedingt der im Ansaugtrakt erzeugte Unterdruck genutzt werden. Jedoch können starke Schwankungen des auf diese Weise erzeugten Unterdrucks die Leistungsfähigkeit der Bremsanlage, insbesondere im Hinblick auf die zukünftig ständig steigenden Leistungsanforderungen, nachteilig beeinflussen, so daß Aufwand und Kosten für die Bereitstellung einer unabhängigen Unterdruckquelle unumgänglich sind.

In DE 195 01 760 A1 wird eine Vorrichtung und ein Verfahren zum Steuern eines ABS/ASR-Systems beschrieben, die eine Kombination einer Rückförderpumpe, wenigstens eines Ansaugventils und wenigstens eines Umschaltventils umfasst. Die Rückförderpumpe ist eingangsseitig über das Ansaugventil mit dem Hauptbremszylinder und über ein Rückschlagventil mit Auslassventilen der Radbremszylinder der Radbremsen verbunden. Ausgangsseitig ist die Rückförderpumpe über einen Dämpfer mit den Einlassventilen der Radbremszylinder und über das Umschaltventil mit dem Hauptbremszylinder verbunden. Dadurch ist es möglich, bei Bedarf durch die Rückförderpumpe Druck in den Radbremszylindern aufzubauen.

Schließlich ist aus DE 1 800 633 A ein hydraulischer Kraftverstärker bekannt, der mittels einer nichtsaugenden Pumpe einen Radbremsdruck erzeugt, wenn die Pumpe beim Betätigen des Bremspedals aus einer Zumesskammer mit Bremsflüssigkeit versorgt wird.

Der Erfindung liegt die Aufgabe zugrunde, eine verbesserte hydraulische Fahrzeugbremsanlage bereitzustellen, die kompakt und mit geringem Kostenaufwand herstellbar ist und die eine erhöhte Sicherheit bietet.

Der Erfindung liegt daher die Aufgabe zugrunde, eine verbesserte hydraulische Fahrzeugbremsanlage bereitzustellen, die kompakter und mit einem geringeren Kostenaufwand herstellbar sowie komfortabel betätigbar ist.

Dieser Aufgabe ist erfindungsgemäß mit einer Bremsdruckgebervorrichtung gelöst, die die im Patentanspruch 1 angegebenen Merkmale aufweist.

Erfindungsgemäß wird der bei Betätigung der Bremsdruckgebervorrichtung aufgrund der Verkleinerung des Volumens der Hydraulikkammer in der Radbremse anstehenden Bremsfluidmenge mittels der Pumpe zusätzlich die Bremsfluidmenge zugeführt, die aufgrund der Verkleinerung des Volumens der zusätzlichen Hydraulikkammer an der Eingangsseite der Pumpe ansteht. Diese mittels der Pumpe zusätzlich in die Radbremse geförderte Bremsfluidmenge bewirkt, daß sich in der Radbremse bzw. der Hydraulikkammer ein höherer Bremsdruck als der ursprünglich in der Hydraulikkammer erzeugte Bremsdruck einstellt. Auf diese Weise wird eine sekundäre Servokraft bereitgestellt, mittels der sich in besonders vorteilhafter Weise eine Verstärkung der über das Betätigungselement eingeleiteten Betätigungskraft und/oder der vom Bremskraftverstärker bereitgestellten primären Servokraft erreichen läßt. Die Gesamtbetätigungskraft der Bremsdruckgebervorrichtung setzt sich somit zusammen aus der eingeleiteten Betätigungskraft, der primären und der sekundären Servokraft.

Dabei werden die bei einem Einsatz eines allgemein bekannten Bremskraftverstärkers zuvor dargelegten Nachteile vermieden, da der die primäre Servokraft bereitstellende Bremskraftverstärker eine erheblich geringere Verstärkung aufbringen muß. Im Fall eines pneumatischen Bremskraftverstärkers bedeutet dies konkret, daß ein einfacher Verstärker mit einem Durchmesser von 6 Zoll für ein Fahrzeug ausreichend ist, das bei einer konventionellen Fahrzeugbremsanlage zumindest mit einem Tandemverstärker eines Durchmessers von 8 und 9 Zoll ausgerüstet werden müßte. Hinzu kommt, weil ein erheblich "schwächerer" pneumatischer Bremskraftverstärker ausreicht, daß auch die Unterdruckquelle "schwächer" und insofern einfacher und mit einem geringeren Kostenaufwand ausgestaltet sein kann. Da ein "schwächerer" pneumatischer Bremskraftverstärker sich auch unempfindlicher gegenüber Schwankungen des Unterdrucks verhält, kann bei einem mit Ottomotor ausgerüsteten Fahrzeug sogar der prinzipbedingt im Ansaugtrakt erzeugte Unterdruck in unkritischer Weise genutzt werden.

Ein weiterer wesentlicher Vorteil ist, daß zwei voneinander unabhängige Servokräfte aufgebracht weden. Denn hierdurch besteht eine Redundanz, sollte es zu einem Ausfall entweder des die primäre Servokraft bereitstellenden Bremskraftverstärkers oder der die sekundäre Servokraft bereitstellenden Pumpe kommen, wodurch ein entscheidender Beitrag zur Erhöhung der Sicherheit der Fahrzeugbremsanlage geleistet wird.

Bei dem Bremskraftverstärker kann es sich zum einen um einen Bremskraftverstärker im üblichen Sinne handeln, der der über das Betätigungselement eingeleiteten Betätigungskraft eine fest vorgegebene primäre Servokraft überlagert. Zum anderen kann es sich um einen elektronisch steuerbaren Bremskraftverstärker handeln, der mittels eines elektrischen Aktuators steuerbar ist, um erstens die Bremsdruckgebervorrichtung anstelle oder zusätzlich zu einer Betätigung über das Betätigungselement zu betätigen und zweitens die primäre Servokraft einzustellen. Als elektrischer Aktuator kommt vorzugsweise eine Elektromagnetventilanordnung in Betracht, die einbauraumsparend in den elektronisch steuerbaren Bremskraftverstärker integriert ist. Durch die Verwendung eines elektronisch steuerbaren Bremskraftverstärkers wird die Fahrzeugbremsanlage für die Durchführung von Not- bzw. Zielbremsungen sowie automatischen Bremsvorgängen beispielsweise zur Fahrdynamik-, Antriebsschlupf- sowie Abstandsregelung besonders geeignet.

In vorteilhafter Weise wird das Regelverhalten der Fahrzeugbremsanlage in Bezug auf Betätigungskomfort, womit Rückwirkungen auf das Betätigungselement (Bremspedal) gemeint sind, und Dosierbarkeit verbessert, wenn die Förderleistung der Pumpe mittels eines elektrischen Aktuators steuerbar ist, um die sekundäre Servokraft einzustellen. Als elektrischer Aktuator ist hier ein Elektromotor zu bevorzugen, dessen Drehzahl zur Einstellung der Förderleistung regelbar ist.

Desweiteren kann eine Ventileinrichtung vorgesehen sein, durch die in einer ersten Stellung eine Fluidverbindung zwischen dem Ausgang der zusätzlichen Hydraulikkammer und dem Ausgang der Hydraulikkammer nur über die Pumpe besteht und in einer zweiten Stellung eine eine Fluidverbindung zwischen dem Ausgang der zusätzlichen Hydraulikkammer und dem Ausgang der Hydraulikkammer direkt besteht. Wenn die Ventileinrichtung sich in ihrer zweiten Stellung befindet, wird die Pumpe quasi überbrückt, so daß keine sekundäre Servokraft bereitgestellt wird. Folglich wird die über das Betätigungselement eingeleitete Betätigungskraft nur um die vom Bremskraftverstärker bereitgestellte primäre Servokraft verstärkt, was wie schon erwähnt für etwa 90 Prozent der Fahrzeugbremsungen ausreichend ist. Somit könnte der Antrieb der Pumpe permanent erfolgen, beispielsweise in dem einfacherweise mittels eines Antriebsriemens eine betriebliche Kopplung der Pumpe mit einem im Fahrzeug ohnehin vorhandenen Antriebsaggregat besteht. Nur dann wenn eine der mit einem Anteil von etwa 10 Prozent schon erwähnten Fahrzeugvollbremsungen durchzuführen ist, nimmt die Ventileinrichtung ihre erste Stellung ein, so daß über die Pumpe zusätzlich die sekundäre Servokraft bereitgestellt wird. Dazu ist in bevorzugter Weise die Ventileinrichtung elektromagnetisch betätigbar, wobei sie ihre erste Stellung als Betätigungsstellung und ihre zweite Stellung federbetätigt als Grundstellung einnimmt.

Da Fahrzeugbremsanlagen üblicherweise zwei getrennte Bremskreise aufweisen, ist vorgesehen, daß zu der Hydraulikkammer eine zweite Hydraulikkammer in Serie geschaltet ist, deren Volumen sich beim Betätigen der Bremsdruckgebervorrichtung gleichfalls verkleinert, um einen Bremsdruck für wenigstens eine weitere Radbremse zu erzeugen. Somit können die beiden Hydraulikkammern jeweils in einem ihnen zugeordnetem Bremskreis einen Bremsdruck für die jeweiligen Radbremsen erzeugen, unabhängig davon, ob für das Fahrzeug zum Beispiel eine Diagonal- oder eine Vorder-/Hinterachs-Aufteilung vorgesehen ist.

Damit sich in den Bremskreisen dergleiche Bremsdruck einstellt, ist die Bremsdruckgebervorrichtung so ausgelegt, daß beim Betätigen der Bremsdruckgebervorrichtung sich das Volumen der zweiten Hydraulikkammer in demgleichen Maße als das Volumen der Hydraulikkammer verkleinert. Idealerweise wird die zweite Hydraulikkammer dadurch gebildet, in dem in einer gemeinsamen Bohrung der Bremsdruckgebervorrichtung ein axial abdichtend und verschieblich angeordneter Schwimmkolben die beiden Hydraulikkammem voneinander trennt.

Damit eine sekundäre Servokraft in Größenordnung der vom Bremskraftverstärker bereitgestellten primären Servokraft erzielt werden kann, ist die Bremsdruckgebervorrichtung so dimensioniert, daß beim Betätigen der Bremsdruckgebervorrichtung sich das Volumen der Hydraulikkammer in einem prozentual geringeren Maße als das Volumen der zusätzlichen Hydraulikkammer verkleinert.

Zur Steuerung der Bremsdruckgebervorrichtung ist eine elektronische Steuereinheit vorgesehen ist, die mittels Sensoren zumindest eine mit der Betätigung der Bremsdruckgebervorrichtung in Beziehung stehende Größe ermittelt, um in deren Abhängígkeit die elektrischen Aktuatoren anzusteuern. Dabei kann es sich bei der/den mit der Betätigung der Bremsdruckgebervorrichtung in Beziehung stehenden Größe(n) beispielsweise um das Bremslichtschaltersignal, den am Betätigungselement eingeleiteten Weg, die am Betätigungselement eingeleitete Kraft, die Geschwindigkeit mit der das Betätigungselement betätigt wird, die im Bremskraftverstärker anstehende Druckdifferenz, den in der Hydraulikkammer erzeugten Druck sowie daraus abgeleiteten Größen handeln. Bei den Aktuatoren, sofern elektrisch ansteuerbar, kann es sich beispielsweise um den die Pumpe antreibenden Elektromotor, die die Pumpe überbrückende Ventileinrichtung und die den Bremskraftverstärker steuernde Elektromagnetventilanordnung handeln. Dies gestattet im einfachsten Anwendungsfall, daß die Pumpe nur bei einer Betätigung des Betätigungselementes betätigt wird, so daß Antriebsenergie eingespart und permanent auftretende Antriebsgeräusche vermieden werden.

Zur Einsparung von Komponenten und somit Kosten wird entscheidend beigetragen, wenn eine Antiblockier-/Antriebsschlupfregelvorrichtung zwischen der Bremsdruckgebervorrichtung und der Radbremse angeordnet ist, wobei die Pumpe Bestandteil der Antiblockier-/Antriebsschlupfregelvorrichtung ist. Dadurch wird die sekundäre Servokraft mittels der in der Antiblockier-/Antriebsschlupfregelvorrichtung ohnehin vorhandenen Pumpe bereitgestellt. Desweiteren ergibt sich in Bezug auf Einsparung von Einbauraum der Vorteil, daß die Bremsdruckgebervorrichtung und die Antiblockier-/Antriebsschlupfregelvorrichtung zu einer kompakten Baueinheit integriert werden können. Desweiteren entfallen durch die Integration die ansonsten notwendigen Verbindungsleitungen zwischen der Bremsdruckgebervorrichtung und der Antiblockier-/Antriebsschlupfregelvorrichtung, wodurch das Risiko von Leckagen minimiert und Systemsicherheit gewonnen wird.

Dabei ist für die Antiblockier-/Antriebsschlupfregelvorrichtung eine elektronische Steuereinheit vorgesehen, die mittels Sensoren zumindest eine mit dem dynamischen Verhalten des Fahrzeugs in Beziehung stehende Größe ermittelt, um in deren Abhängigkeit mittels elektrischen Stellgliedern den Bremsdruck in der wenigstens einen Radbremse zu steuern. Bei der/den mit dem dynamischen Verhalten des Fahrzeugs in Beziehung stehenden Größe(n) handelt es sich zum Beispiel um die Rad- bzw. Fahrzeuggeschwindigkeit(en), Rad- bzw. Fahrzeugverzögerung(en) sowie daraus abgeleiteten Referenzen; sofern die Fahrzeugbremsanlage auch zur Fahrdynamikregelung ausgelegt ist, um die Längs- bzw. Querbeschleunigung sowie den Lenkwinkel des Fahrzeugs und, sofern die Fahrzeugbremsanlage zur Abstandsregelung eingerichtet ist, um den Abstand zu einem Hindernis.

Ein Vorteil besteht nun, wenn die elektronische Steuereinheit der Bremsdruckgebervorrichtung und die elektronische Steuereinheit der Antiblockier-/Antriebsschlupfregelvorrichtung über Datenleitungen miteinander kommunizieren oder eine gemeinsame elektronische Steuereinheit für die Bremsdruckgebervorrichtung und die vorgesehen ist. Hierdurch ist ein Betreiben der Bremsdruckgebervorrichtung in Abhängigkeit des Betriebszustandes der Antiblockier-/Antriebsschlupfregelvorrichtung und umgekehrt möglich. Vor allem aber können die elektrischen Aktuatoren der Bremsdruckgebervorrichtung in Abhängigkeit von der/den mit dem dynamischen Verhalten des Fahrzeugs in Beziehung stehenden Größe(n) gesteuert werden, gleichermaßen kann die Steuerung der elektrischen Stellglieder der Antiblockier-/Antriebsschlupfregelvorrichtung in Abhängigkeit von der/den mit der Betätigung der Bremsdruckgebervorrichtung in Beziehung stehenden Größe(n), die unter anderem den Bremswunsch des Fahrzeugführers repräsentieren, erfolgen. Falls die elektronischen Steuereinheiten der Bremsdruckgebervorrichtung und der Antiblockier-/Antriebsschlupfregelvorrichtung als separate Einheiten ausgeführt sind, kann in vorteilhafter Weise als Datenleitung für die Kommunikation ein im Fahrzeug ohnehin vorhandenes Bussystem, wie zum Beispiel CAN-Bus, mitverwendet werden.

Ein besonders vorteilhaftes Betriebsverfahren besteht darin, daß dann, dann, wenn der Grädient Bremsdruck zu Gesamtbetätigungskraft durch die eingeleitete Betätigungskraft und/oder die primäre Servokraft bestimmt ist, und der Gradient Bremsdruck zu Gesamtbetätigungskraft einen vorgegebenen Gradienten unterschreitet, die sekundäre Servokraft der eingeleiteten Betätigungskraft und/oder der primären Servokraft in einem solchen Maße überlagert wird, daß der vorgegebene Gradient zumindest aufrechterhalten wird. Hierdurch ergibt sich eine sehr wirtschaftliche Betriebsweise, vor allem dann wenn der Gradient Bremsdruck zu Gesamtbetätigungskraft durch die eingeleitete Betätigungskraft und die primäre Servokraft wie bei einer konventionellen Bremsdruckgebervorrichtung bestimmt ist. Somit ist durch die Pumpe die sekundäre Servokraft erst dann zusätzlich aufzubringen, wenn die vom Bremskraftverstärker bereitgestellte primäre Servokraft aufgebraucht ist, also im Vergleich zu einer konventionellen Bremsdruckgebervorrichtung der Aussteuerpunkt des Bremskraftverstärkers erreicht ist. Die Verstärkungskennlinie wird also mittels der von der Pumpe ab Erreichen des Aussteuerpunktes bereitgestellten sekundären Servokraft, über den Aussteuerpunkt hinaus verlängert. Ein Anwendungsbeispiel hierfür bilden die eingangs schon erwähnten Fahrzeugbremsungen mit einem Anteil von 10 Prozent, für die eine hohe (volle) Bremskraftverstärkung benötigt wird.

Weiterhin ist es zum Betreiben besonders vorteilhaft so zu verfahren, daß dann, wenn der Gradient Bremsdruck zu Gesamtbetätigungskraft durch die eingeleitete Betätigungskraft und/oder die primäre Servokraft bestimmt ist und einem vorgegebenen Gradienten entspricht, und zumindest eine mit der Betätigung der Bremsdruckgebervorrichtung in Beziehung stehende Größe von einem vorgegebenen Wert abweicht, und/oder zumindest eine mit dem dynamischen Verhalten des Fahrzeugs in Beziehung stehende Größe von einem vorgegebenen Wert abweicht, die sekundäre Servokraft der eingeleiteten Betätigungskraft und/oder der primären Servokraft in einem solchen Maße überlagert wird, daß der Gradient Bremsdruck zu Gesamtbetätigungskraft einem weiteren vorgegebenen Gradienten entspricht, der größer als der vorgegebene Gradient ist. Sofern der Gradient Bremsdruck zu Gesamtbetätigungskraft durch die eingeleitete Betätigungskraft und die primäre Servokraft wie bei einer konventionellen Bremsdruckgebervorrichtung bestimmt ist, wird hier folglich im Vergleich zu einer konventionelien Bremsdruckgebervorrichtung bereits vor Erreichen des Aussteuerpunktes des Bremskraftverstärkers die sekundäre Servokraft zusätzlich aufgebracht. Es erfolgt also eine Umschaltung auf eine steilere Verstärkungskennlinie. Ein Anwendungsbeispiel hierfür ist eine Not- bzw. Zielbremsung, die ausgeführt wird, wenn der Fahrerwunsch, der sich aus der mit der Betätigung der Bremsdruckgebervorrichtung in Beziehung stehenden Größe(n) ergibt, eine höhere Fahrzeugverzögerung verlangt, als die tatsächliche Fahrzeugverzögerung, die sich aus der Auswertung der mit dem dynamischen Verhalten des Fahrzeugs in Beziehung stehenden Größe(n) ergibt.

Damit die volle Verstärkung von der Bremsdruckgebervorrichtung aufgebracht wird, entspricht der vorgegebene Gradient dem Gradienten, der sich bei maximaler primärer Servokraft ergibt. Desweiteren entspricht der weitere vorgegebene Gradient dem Gradienten, der sich bei maximaler primärer Servokraft und maximaler sekundärer Servokraft ergibt.

Die Erfindung wird nachfolgend anhand der Zeichungen erläutert. Dazu zeigen:
Fig. 1 schematisch eine hydraulische Fahrzeugbremsanlage mit einer erfindungsgemäßen Bremsdruckgebervorrichtung,
Fig. 2 schematisch eine alternative hydraulische Fahrzeugbremsanlage mit einer erfindungsgemäßen Bremsdruckgebervorrichtung, und
Fig. 3 ein Diagramm mit dem Kennfeld der erfindungsgemäßen Bremsdruckgebervorrichtung.

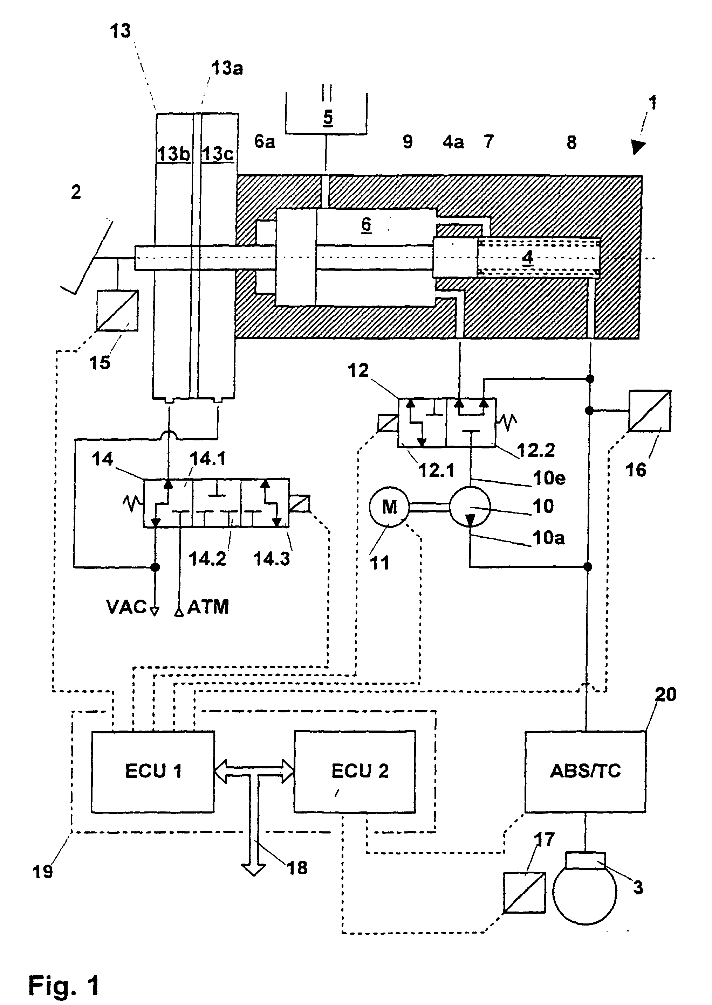

Die in Fig. 1 dargestellte hydraulische Bremsanlage weist eine Bremsdruckgebervorrichtung 1 auf, die über ein Bremspedal 2 betätigbar ist, um einen Bremsdruck für eine Radbremse 3 zu erzeugen. Die Erzeugung des Bremsdruckes erfolgt in einer Hydraulikkammer 4, an die die Radbremse 3 angeschlossen ist.

Für die Versorgung mit Bremsfluid ist ein Reservoir 5 vorgesehen. Das Reservoir ist mit einer zusätzlichen Hydraulikkammer 6 verbunden, die über einen Kanal 7 mit der Hydraulikkammer 4 verbunden ist. Es kann aber auch vorgesehen sein, daß das Reservoir 5 anstatt mit der weiteren Hydraulikkammer 6 mit der Hydraulikkammer 4 verbunden ist, oder daß die weitere Hydraulikkammer 6 und die Hydraulikkammer 4 mit dem Reservoir 5 verbunden sind, so daß der Kanal 7 zur Verbindung der Kammern 6, 4 nicht erforderlich ist.

Zur Erzeugung des Bremsdruckes wird die Hydraulikkammer 4 auf einer Seite von einem axial verschiebbaren Kolben 4a begrenzt. Die Verschiebung des Kolbens 4a erfolgt bei Betätigung der Bremsdruckgebervorrichtung 1 durch Einleiten einer Betätigungskraft FB über das Bremspedal 2. Eine Federanordnung 8 wirkt der Verschiebung des Kolbens 4a bei Betätigung des Bremspedals 2 entgegen und bewirkt, daß die Bremsdruckgebervorrichtung 1 im unbetätigtem Zustand die Grundstellung wie in Fig. 1 dargestellt einnimmt. In der Grundstellung nimmt der Kolben 4a eine Position ein, in der der zur zusätzlichen Hydraulikkammer 6 verbindende Kanal 7 geöffnet ist, so daß die Hydraulikkammer 4 mit dem Reservoir 5 in Verbindung steht. Wird demgegenüber die Bremsdruckgebervorrichtung in ihre Betätigungsstellung überführt, so wird der Kanal 7 durch Verschiebung des Kolbens 4a nach rechts verschlossen und das Volumen der Hydraulikkammer 4 verkleinert, wodurch ein Bremsdruck p für die Radbremse 3 erzeugt wird. Der Bremsdruck p ergibt sich dabei in bekannter Weise in Abhängigkeit von der über das Bremspedal 2 eingeleiteten Betätigungskraft FB und der Arbeitsfläche A₄ des Kolbens 4a (p = FB / A₄). Da es sich bei der Arbeitsfläche A₄ des Kolbens 4 um einen bekannten in der Regel sich nicht ändernden Systemparameter handelt, ist der für die Radbremse 3 erzeugte Bremsdruck p proportional zu der über das Bremspedal 2 eingeleiteten Betätigungskraft FB (p ∼ FB).

Die bereits erwähnte zusätzliche Hydraulikkammer 6 wird auf einer Seite von einem axial verschiebbaren weiteren Kolben 6a begrenzt, dessen Verschiebung nach rechts gleichfalls bei Betätigung des Bremspedals 2 erfolgt. Da die Kolben 6a, 4a über ein starres Verbindungsglied 9 betrieblich gekoppelt sind, werden die Kolben 6a, 4a bei Betätigung des Bremspedals synchron in axialer Richtung entgegen der Wirkung der Federanordnung 8 verschoben. Durch die betriebliche Kopplung der Kolben 6a, 4a bewirkt die Federanordnung 8, daß bei unbetätigtem Bremspedal 2 auch der weitere Kolben 6a seine Grundstellung einnimmt, in der die zusätzliche Hydraulikkammer 6 mit dem Reservoir 5 in Verbindung steht.

Zur Verstärkung der über das Bremspedal 2 eingeleiteten Betätigungskraft FB stellt ein Bremskraftverstärker 13 eine primäre Servokraft FS1 bereit. Der Bremskraftverstärker 13 weist ein Gehäuse auf, das von einer beweglichen Wand 13a in eine Druckkammer 13b und eine Vakuumkammer 13c unterteilt ist, wobei die bewegliche Wand 13a eine betriebliche Kopplung zu den Kolben 6a, 4a der Bremsdruckgebervorrichtung aufweist. Die Vakuumkammer 13c ist an eine nicht näher dargestellte Vakuumquelle VAC angeschlossen, während die Druckkammer 13b mit der umgebenden Atmosphäre ATM verbindbar ist. Besteht eine Verbindung der Druckkammer 13b mit der Atmosphäre ATM, so wird eine Druckdifferenz an der beweglichen Wand 13a wirksam, in deren Abhängigkeit die primäre Servokraft FS1 erzeugt wird, um die über das Bremspedal eingeleitete Betätigungskraft FB zu überlagern. Sind dagegen die Druckkammer 13b und die Vakuumkammer 13c miteinander verbunden, so ist keine Druckdifferenz an der beweglichen Wand 13a wirksam und und es wird keine primäre Servokraft FS1 erzeugt.

Mittels eines elektromagnetisch betätigten Drei/Drei-Wegeventils 14 ist der Bremskraftverstärker 13 elektronisch steuerbar. In einer ersten Stellung 14.1 (federbetätigte Grundstellung) sind die Druckkammer 13b und die Vakuumkammer 13c miteinander verbunden, so daß keine Druckdifferenz an der beweglichen Wand 13a wirksam ist bzw. eine an der beweglichen Wand 13a bestehende Druckdifferenz abgebaut wird. In einer zweiten Stellung 14.2 sind die Druckkammer 13b und die Vakuumkammer 13c separat abgesperrt, so daß eine an der beweglichen Wand 13a bestehende Druckdifferenz (konstant) aufrechterhalten wird. In einer dritten Stellung 14.3 ist die Druckkammer 13b mit der umgebenden Atmosphäre ATM verbunden, so daß wegen der Verbindung der Vakuumkammer 13c zu der Vakuumquelle VAC eine Druckdifferenz an der beweglichen Wand 13a aufgebaut bzw. eine an der beweglichen Wand 13a bestehende Druckdifferenz erhöht wird. Somit läßt sich durch aufeinanderfolgenden Wechsel unter den Stellungen 14.1, 14.2 sowie 14.3 die Druckdifferenz an der beweglichen Wand 13a und damit die primäre Servokraft FS1 auf komfortable Weise einstellen. Wesentlich ist ebenfalls, daß es aufgrund der elektronischen Steuerbarkeit des Bremskraftverstärkers 13 möglich ist die Bremsdruckgebervorrichtung nicht nur zusätzlich zu einer Betätigung über das Bremspedal 2, sondern auch anstelle einer Betätigung über das Bremspedal 2 zu betätigen.

Um die über das Bremspedal 2 eingeleitete Betätigungskraft FB und/oder die von dem Bremskraftverstärker 13 erzeugte primäre Servokraft FS1 weiter zu verstärken, ist eine Hydraulikpumpe 10 vorgesehen, die eine sekundäre Servokraft FS2 erzeugt, so daß sich die Gesamtbetätigungskraft der Bremsdruckgebervorrichtung aus eingeleiteter Betätigungskraft FB, primärer und sekundärer Servokraft FS1, FS2 ergibt. Dazu steht die zusätzliche Hydraulikkammer 6 in Verbindung mit der Eingangsseite 10e der Hydraulikpumpe 10, deren Ausgangsseite 10a mit der Radbremse 3 bzw. der Hydraulikkammer 4 verbunden ist. Bei Betätigung des Bremspedals 2 wird durch die Verschiebung des weiteren Kolbens 6a auch die Verbindung von dem Reservoir 5 zu der zusätzlichen Hydraulikkammer 6 abgesperrt und das Volumen der zusätzlichen Hydraulikkammer 6 verkleinert. Das aufgrund der Volumenverkleinerung überschüssige Bremsfluid wird mittels der Hydraulikpumpe 10 in die Radbremse 3 bzw. die Hydraulikkammer 4 gefördert und führt bei sich nicht ändernder eingeleiteter Betätigungskraft FB und/oder primärer Servokraft FS1 zu einer Erhöhung des Bremsdrucks p, oder - anders ausgedrückt - die eingeleitete Betätigungskraft FB und/oder die primäre Servokraft FS1 werden durch die sekundäre Servokraft FS2 verstärkt.

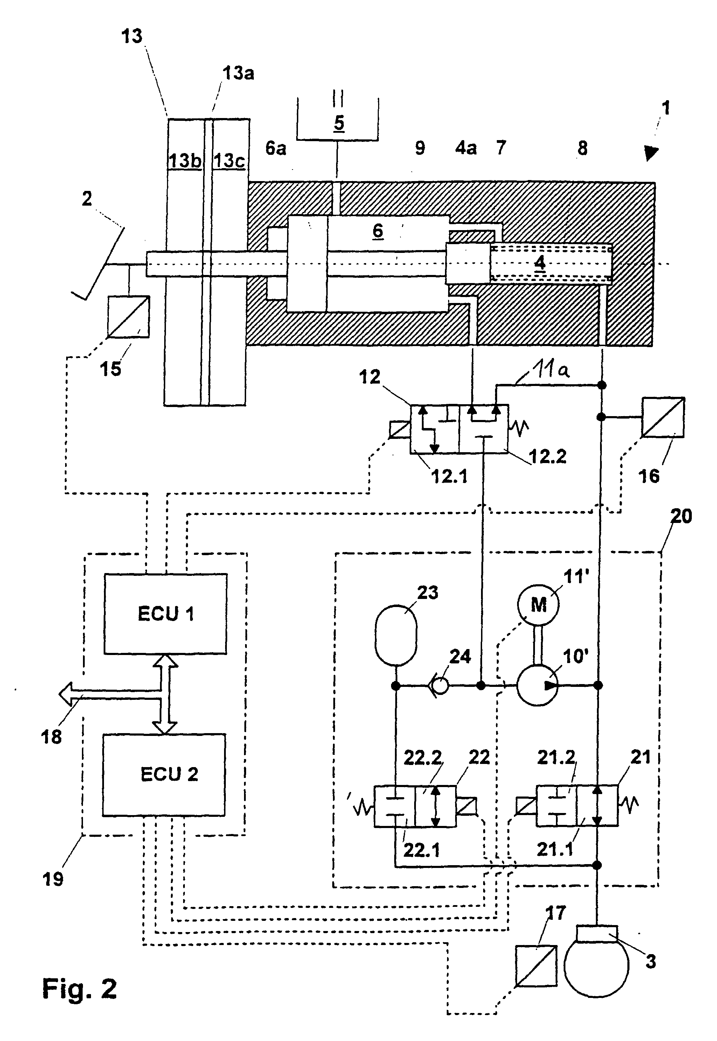

Dabei hängt das Maß der durch die sekundäre Servokraft FS2 bewirkten Verstärkung davon ab, wie sich bei Betätigung des Bremspedals 2 die Volumina der Hydraulikkammem 6, 4 im Verhältnis zueinander ändern. Insbesondere um eine Verstärkung in der Grössenordnung eines allgemein bekannten (pneumatischen) Bremskraftverstärkers zu erzielen, muß sich bei Betätigung des Bremspedals 2 das Volumen der Hydraulikkammer 4 in einem geringeren Masse als das Volumen der zusätzlichen Hydraulikkammer 6 verkleinern. Ausgehend von einer zylinderförmigen Gestalt der Hydraulikkammem 6, 4 sowie einer bei Betätigung des Bremspedals 2 synchronen Verschiebung der Kolben 6a, 4a um die gleiche Wegstrecke s in axialer Richtung, hängen die Volumina der Hydraulikkammern 6, 4 nur von den Arbeitsflächen A₆, A₄ der Kolben 6a, 4a ab. Dies bedeutet, daß die Arbeitsfläche A₆ des weiteren Kolbens 6a grösser sein muss als die Arbeitsfläche A₄ des Kolbens 4a, damit sich das Volumen der Hydraulikkammer 4 in einem geringeren Masse als das Volumen der zusätzlichen Hydraulikkammer 6 verkleinert. Bezogen auf Fig. 1 und 2 sei noch angemerkt, daß hier unter der Arbeitsfläche A₆ die Querschnittsfläche des weiteren Kolbens 6a abzüglich der Querschnittsfläche des Verbindungsglieds 9 und unter der Arbeitsfläche A₄ die Querschnittsfläche des Kolbens 4a zu verstehen sind. Dabei lässt sich das Maß der Verstärkung bzw. das Übersetzungsverhältnis i auf einfache Weise gemäss der Beziehung i = 1 + A₆ / A₄ bestimmen. Bei kompakten Abmessungen der Bremsdruckgebervorrichtung 1, beispielsweise einem Durchmesser des Kolbens 4a von 10 mm, einem Durchmesser des weiteren Kolbens 6a von 24,5 mm sowie einem Durchmesser des Verbindungsglieds 9 von 4,5 mm, ergibt sich ein Übersetzungsverhältnis von i = 5. Für den Sonderfall, daß die Arbeitsflächen A₆, A₄ gleich gross sind (A₆ = A₄), gilt das Übersetzungsverhältnis von i = 2.

Der Antrieb der Hydraulikpumpe 10 könnte permanent erfolgen, wozu eine betriebliche Kopplung der Hydraulikpumpe 10 mit einem im Fahrzeug ohnehin vorhandenen Antriebsaggregat denkbar wäre, was auf einfache Weise, beispielsweise mittels eines Antriebsriemens, realisierbar ist. Dabei würde funktionsgerecht bei unbetätigtem Bremspedal 2 in der Radbremse 3 kein Bremsdruck erzeugt, da in diesem Fall Bremsfluid aus der zusätzlichen Hydraulikkammer 6 von der Hydraulikpumpe 10 über die Hydraulikkammer 4 und den Kanal 7 lediglich umgepumpt wird. Dagegen wird bei betätigtem Bremspedal 2 ein Bremsdruck in der Radbremse 3 in der zuvor erläuterten Weise erzeugt, da in diesem Fall die Hydraulikkammern 6, 4 nicht miteinander in Verbindung stehen, so daß ein Umpumpen von Bremsfluid nicht möglich ist.

Allerdings ist es nicht nur aus Gründen der Einsparung von Antriebsenergie besser, wenn ein Antrieb zur Betätigung der Hydraulikpumpe 10 nur dann erfolgt, wenn das Bremspedal 2 betätigt wird oder eine Erzeugung der sekundären Servokraft FS2 überhaupt gewünscht ist. Deshalb ist für den Antrieb der Hydraulikpumpe 10 ein Elektromotor 11 vorgesehen, der von einer elektronischen Steuereinheit ECU1 angesteuert ist. Die elektronische Steuereinheit ECU1 erfasst mittels Sensoren 15, 16 mit der Betätigung der Bremsdruckgebervorrichtung in Beziehung stehende Größen und wertet diese aus, um in deren Abhängigkeit neben dem Elektromotor 11 auch das elektromagnetisch betätigte Drei/Drei-Wegeventil 14 zur Einstellung der primären Servokraft FS1 anzusteuern. Dabei erfaßt der Sensor 15 beispielsweise den Betätigungsweg, die Betätigungsgeschwindigkeit oder die Betätigungskraft an dem Bremspedal 2, während der Sensor 16 den in der Hydraulikkammer 4 erzeugten Bremsdruck erfaßt. Einfachstensfalls entspricht der Sensor 15 dem im Fahrzeug ohnehin vorhandenen Bremslichtschalter, der den Betätigungszustand des Bremspedals 2 als logisches Ein-/Aussignal wiedergibt, in dessen Abhängigkeit eine Ansteuerung des Elektromotors 11 immer dann vorgenommen wird, wenn eine Betätigung des Bremspedals 2 erfolgt.

Auch kann vorgesehen sein, daß die elektronische Steuereinheit ECU1 über das den Elektromotor 11 ansteuernde Signal die Drehzahl des Elektromotors 11 verändern kann, um die Förderleistung der Hydraulikpumpe 10 variabel einzustellen. Dies erfolgt idealerweise in Abhängigkeit von der/den mit der Betätigung des Bremspedals 2 in Beziehung stehenden Größe(n). Die Sensoren zur Erfassung der mit der Betätigung des Bremspedals 2 in Beziehung stehenden Grösse können aber auch innerhalb der Bremsdruckgebervorrichtung 1 angeordnet sein, wenn zum Beispiel die im Bremskraftverstärker 13 an der beweglichen Wand anstehende Druckdifferenz oder der Verschiebeweg der Kolben 6a, 4a erfaßt werden soll. Vorteilhaft ist die Erfassung des Verschiebewegs der Kolben 6a, 4a. Da nämlich die Arbeitsfläche A₆ des Kolbens 6a eine bekannte in der Regel sich nicht ändernde Systemgrösse ist, ist die bei Betätigung des Bremspedals 2 auftretende Veränderung des Volumens V₆ der zusätzlichen Hydraulikammer 6 proportional zu dem Verschiebeweg s, um den der weitere Kolben 6a axial verschoben wird (V₆ ∼ s). Damit besteht die Möglichkeit die Förderleistung der Hydraulikpumpe 10 in Abhängigkeit von der Veränderung des Volumens der zusätzlichen Hydraulikkammer 6 einzustellen, wodurch sich ein nahezu ideales Regelverhalten erzielen läßt.

Die Hydraulikpumpe 10 ist nur für eine Förderrichtung, nämlich von der zusätzlichen Hydraulikkammer 6 zu der Radbremse 3, ausgelegt. Damit die Hydraulikpumpe 10 in Richtung von der Radbremse 3 zu der zusätzlichen Hydraulikkammer 6 nicht durchströmbar ist, weist die Hydraulikpumpe 10 auf der Eingangs- und Ausgangsseite 10e, 10a Rückschlagventile auf, die vorzugsweise in die Hydraulikpumpe 10 intergriert sind und von daher nicht dargestellt sind. Damit wird erreicht, daß bei betätigter Bremsdruckgebervorrichtung 1 und nicht betätigter Hydraulikpumpe 10, also bei nicht angesteuertem Elektromotor 11, ein Bremsdruck in der Radbremse 3 zumindest zeitweise konstant gehalten werden kann.

Zwischen den Ausgängen der Hydraulikkammem 4, 6 und der Eingangsseite 10e der Hydraulikpumpe 10 ist ein elektromagnetisch betätigtes Drei/Zwei-Wegeventil 12 angeordnet, das von der elektronischen Steuereinheit ECU1 angesteuert wird. In der ersten Stellung 12.1 besteht eine unmittelbare Verbindung zwischen der zusätzlichen Hydraulikkammer 6 und der Radbremse 3 nur über die Hydraulikpumpe 10. In der zweiten Stellung 12.2 (federbetätigte Grundstellung) besteht eine unmittelbare Verbindung zwischen der zusätzlichen Hydraulikkammer 6, der Hydraulikkammer 4 und der Radbremse 3, wobei die Verbindung zu der Hydraulikpumpe 10 abgesperrt ist, die Hydraulikpumpe 10 also überbrückt wird.

Befindet sich die Ventileinrichtung 12 in ihrer ersten Stellung 12.1, so kann Bremsfluid aus der zusätzlichen Hydraulikkammer 6 nur über das eigentliche Stellglied, nämlich die Hydraulikpumpe 10, in die Radbremse 3 gelangen kann, was insbesondere für die Realisierung der zuvor erwähnten Regelverhalten, bei denen die Förderleistung der Hydraulikpumpe 10 eingestellt wird, bedeutsam ist. Deshalb wird, sobald eine Betätigung des Bremspedals 2 erfolgt oder die sekundäre Servokraft FS2 bereitzustellen ist, die Ventileinrichtung 12 in ihre ersten Stellung 12.1 überführt. Dann, wenn die Betätigung des Bremspedals 2 zurückgenommen oder die sekundäre Servokraft FS2 nicht mehr erforderlich ist, wird die Ventileinrichtung 12 in ihre zweite Stellung 12.2 zurückgeführt, so daß Bremsfluid aus der Radbremse 3 nicht nur über die Hydraulikkammer 4 und den Kanal 7, sondern auch über die zusätzliche Hydraulikkammer 6 in das Reservoir 5 zurückströmen kann. Damit wird vermieden, daß bei Zurücknahme der Betätigung des Bremspedals 2 sich der Bremsdruck in der Radbremse 3 mit einem verhältnismässig kleineren Zeitgradienten reduziert als dem Zeitgradienten, mit dem sich bei Betätigung des Bremspedals 2 der Bremsdruck in der Radbremse 3 erhöht. Dies führt also zu einer nicht unwesentlichen Verbesserung des dynamischen Verhaltens der hydraulischen Bremsanlage. Idealerweise ist die Charakteristik der hydraulischen Bremsanlage so ausgelegt, daß die Zeitgradienten bei der Druckerhöhung und der Druckreduzierung übereinstimmend sind.

Es versteht sich, daß die Ventileinrichtung 12 anstelle der elektromagnetischen eine druckgesteuerte Betätigung aufweisen kann, wobei die Druckbetätigung vorzugsweise in Abhängigkeit von einem in der zusätzlichen Hydraulikkammer 6 erzeugten Druck erfolgt. Alternativ kann die Ventileinrichtung 12 auch Mittel zur Einstellung der Durchflußmenge aufweisen, um indirekt die Förderleistung der Hydraulikpumpe 10 einzustellen, falls die Förderleistung der Hydraulikpumpe 10 selbst konstant (nicht einstellbar) ist. Weiterhin besteht die Alternative eine Hydraulikpumpe einzusetzen, die für zwei Förderrichtungen ausgelegt ist, wodurch sich die Ventileinrichtung 12 einsparen läßt.

Zwischen der Bremsdruckgebervorrichtung 1 und der Radbremse 3 ist eine Antiblockierregelvorrichtung 20 vorgesehen, die über eine elektronische Steuereinheit ECU2 angesteuert wird. Dazu ermittelt die elektronische Steuereinheit ECU2 mit dem dynamischen Verhalten des Fahrzeugs in Beziehung stehende Größen, wozu mittels Sensoren 17 das Drehverhalten des der Radbremse 3 zugeordneten Fahrzeugrades erfaßt wird. Über zumindest eine Kommunikationsleitung 18 kommunizieren die elektronischen Steuereinheiten ECU1, ECU2 der Bremsdruckgebervorrichtung 1 und der Antiblockierregelvorrichtung 20 miteinander, um Daten auszutauschen. Es besteht aber auch die Möglichkeit die elektronischen Steuereinheiten ECU1, ECU2 zu einer gemeinsamen elektronischen Steuereinheit 19 zusammenzufassen.

Die in Fig. 2 gezeigte alternative hydraulische Fahrzeugbremsanlage ist weitgehend identisch zu der in Fig. 1 dargestellten hydraulischen Fahrzeugbremsanlage. Ein Unterschied ist, daß der Bremskraftverstärker nicht elektronisch steuerbar ist, so daß zum einen die primäre Servokraft FS1 nicht eingestellt werden kann, zum anderen eine Betätigung der Bremsdruckgebervorrichtung anstelle einer Betätigung über das Bremspedal 2 nicht erfolgen kann. Ein wesentlicher Unterschied ist jedoch, daß die Hydraulikpumpe 10', die ohnehin Bestandteil der Antiblockierregelvorrichtung 20 ist, auch die Funktion der Hydraulikpumpe zur Erzeugung der sekundären Servokraft FS2 übernimmt.

Die Antiblockierregelvorrichtung 20 umfasst ein erstes und zweites Ventil 21, 22, um den Bremsdruck in der Radbremse 3 durch Einstellung von Druckaufbau-, Druckhalte- sowie Druckabbauphasen zu modulieren. Weiterhin umfasst die Antiblockierregelvorrichtung 13 eine Speicherkammer 23, in die während einer Druckabbauphase Bremsfluid von der Radbremse abgelassen wird, sowie die Hydraulikpumpe 10', um Bremsfluid von der Speicherkammer 23 in die Bremsdruckgebervorrichtung 1 bzw. die Radbremse 3 zurückzufördern. Die Ventile 21, 22 sind elektromagnetisch betätigbar und die Hydraulikpumpe 10' ist von einem Elektromotor 11' angetrieben, wobei die jeweiligen Ansteuersignale von der elektronischen Steuereinheit ECU2 bereitgestellt werden. Die elektronische Steuereinheit ECU2 nimmt bei Erkennung einer Blockiertendenz an einerm der Räder die erforderliche Ansteuerung der Ventile 22 sowie der Hydraulikpumpe 10' vor. Das erste Ventil 21 verbindet im nicht angesteuerten Zustand 21.1 die Bremsdruckgebervorrichtung 1 mit der Radbremse 3, wogegen die zweite Ventileinrichtung 22 im nicht angesteuerten Zustand 22.1 die Verbindung der Radbremse 3 mit der Speicherkammer 23 sperrt, so daß ein Bremsdruck in der Radbremse 3 aufgebaut werden kann. Soll ein Bremsdruck in der Radbremse 3 konstant gehalten werden, so wird die erste Ventileinrichtung 21 in ihren angesteuerten Zustand 21.2 gebracht, in dem die Verbindung der Bremsdruckgebervorrichtung 1 mit der Radbremse 3 gesperrt ist. Um einen Bremsdruck in der Radbremse 3 abzubauen, werden die erste und die zweite Ventileinrichtung 21, 22 in ihre angesteuerten Zustände 21.2, 22.2 gebracht, wobei die Verbindung der Bremsdruckgebervorrichtung 1 mit der Radbremse 3 gesperrt ist und die Radbremse 3 mit der Speicherkammer 23 verbunden ist.

Damit bei Betätigung der Bremsdruckgebervorrichtung 1 kein Bremsfluid von der zusätzlichen Hydraulikkammer 6 in die Speicherkammer 23 entweichen kann, sondern zur Vorladung unmittelbar der Eingangsseite der Hydraulikpumpe 10' zugeführt wird, ist zwischen der Eingangsseite der Hydraulikpumpe 10' und der Speicherkammer 23 ein Rückschlagventil 24 angeordnet, das eine Strömungsverbindung nur in Richtung von der Speicherkammer 23 zu der Eingangsseite der Hydraulikpumpe 10' zulässt.

Wesentlich ist hierbei, daß die elektronischen Steuereinheiten ECU1, ECU2 der Bremsdruckgebervorrichtung 1 und der Antiblockierregelvorrichtung 20 miteinander kommunizieren, oder eine gemeinsamen elektronischen Steuereinheit 19 vorhanden ist. Da die Ansteuerung der Hydraulikpumpe 10' seitens der elektronischen Steuereinheit ECU2 der Antiblockierregelvorrichtung 20 erfolgt, muß die elektronische Steuereinheit ECU1 der Bremsdruckgebervorrichtung 1 den Ansteuerungswunsch an die elektronische Steuereinheit ECU2 der Antiblockierregelvorrichtung 20 weiterleiten. Ebenso muß die elektronische Steuereinheit ECU2 der Antiblockierregelvorrichtung 20 der elektronische Steuereinheit ECU1 der Bremsdruckgebervorrichtung 1 mitteilen, wenn eine Antiblockierregelung aktiv ist, damit die Ventileinrichtung 12 seitens der elektronischen Steuereinheit ECU1 der Bremsdruckgebervorrichtung 1 in ihre zweite Stellung 12.2 überführt wird, so daß die Hydraulikpumpe 10' während der Antiblockierregelung Bremsfluid ausschließlich aus der Speicherkammer 23 fördert.

In Fig. 1 und 2 ist einfacherweise jeweils nur ein Bremskreis mit einer Radbremse dargestellt. Ein zweiter Bremskreis wird bereitgestellt, in dem zu der Hydraulikkammer 4 eine zweite Hydraulikkammer in Serie geschaltet wird, wobei ein Schwimmkolben die beiden Kammern voneinander trennt.

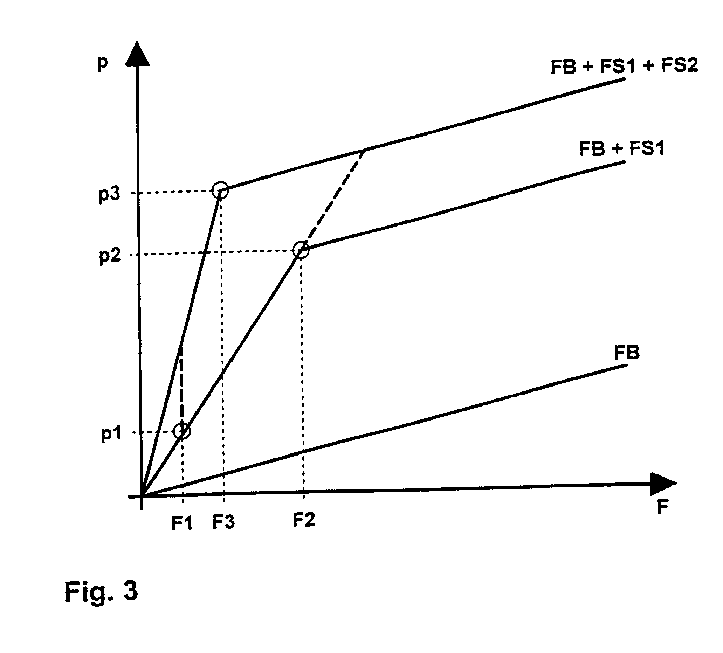

Ein Diagramm mit dem Kennfeld der Bremsdruckgebervorrichtung ist in Fig. 3 dargestellt, wobei der erzeugte Bremsdruck p in Abhängigkeit von der von der Bremsdruckgebervorrichtung aufgebrachten Gesamtbetätigungskraft F dargestellt ist. Wie schon erwähnt ergibt sich die Gesamtbetätigungskraft F als Funktion der über das Bremspedal 2 eingeleiteten Betätigungskraft FB, der vom Bremskraftverstärker 13 erzeugten primären Servokraft FS1 und der von der Hydraulikpumpe 10 bzw. 10' erzeugten sekundären Servokraft FS2 (F = f(FB, FS1, FS2)).

Die untere Kennlinie zeigt den Fall, wenn weder die primäre noch die sekundäre Servokraft FS1, FS2 wirksam ist (FS1 = 0, FS2 = 0), also der Bremsdruck p nur aufgrund der Betätigungskraft FB erzeugt wird. Aufgrund der Proportionalität des Bremsdrucks p zur Betätigungskraft FB ist diese Kennlinie eine Gerade.

Mit der mittleren Kennlinie ist der Fall dargestellt, wenn die sekundäre Servokraft FS2 nicht wirksam ist (FS2 = 0), so daß der Bremsdruck p aufgrund der Betätigungskraft FB und der primären Hilfskraft FS1 erzeugt wird. Diese Kennlinie weist zwei Äste auf. Der vordere steil ansteigende Ast steht für den Verstärkungsanteil der primären Servokraft FS1, der dann ab dem Aussteuerpunkt (F2, p2), wo die primäre Servokraft FS1 aufgebraucht ist in den hinteren weniger steil ansteigenden Ast übergeht, der von der Betätigungskraft FB herrührt. Sofern die primäre Servokraft FS1 einstellbar ist, kann der Gradient (p/F) des vorderen steil ansteigenden Astes variiert werden, und somit das Ansprechverhalten der Bremsdruckgebervorrichtung angepaßt werden.

Anhand der oberen Kennlinie ist nun der Fall gezeigt, wenn der Bremsdruck p aufgrund der Betätigungskraft FB, der primären und der sekundären Servokraft FS1, FS2 erzeugt wird Auch diese Kennlinie weist zwei Äste auf, wobei der vordere Ast eine größere Steigung als bei der mittleren Kennlinie aufweist, da der vordere Ast hierbei für den Verstärkungsanteil der primären und der sekundären Servokraft FS1, FS2 steht. Deshalb ergibt sich hierbei auch ein höherer Aussteuerpunkt (F3, p3), an den sich der nur noch von der Betätigungskraft FB herrührende weniger steil ansteigende Ast anschließt. Auch hierbei ist es möglich durch entsprechende Einstellung der primären und/oder sekundären Servokraft FS1, FS2 den Gradienten (p/F) des vorderen Astes zu variieren, um das Ansprechverhalten zu variieren.

In dem Diagramm ist bei der mittleren Kennlinie ab dem Aussteuerpunkt (F2, p2) gestrichelt eine geradlinige Verlängerung des vorderen steilen Astes gezeigt, die auf dem hinteren weniger steilen Ast der oberen Kennlinie endet. Dieses Betriebsverhalten wird dadurch erreicht, daß ab Erreichen des Aussteuerpunktes (F2, p2), also wenn der tatsächliche Gradient (p/F) den gewünschten Gradienten (p2/F2) unterschreiten würde, die sekundäre Servokraft FS2 zusätzlich zu der primären Servokraft FS1 erzeugt wird und so eingestellt wird, daß der gewünschte Gradient (p2/F) bis zum Erreichen der oberen Kennlinie aufrechterhalten wird.

Weiterhin ist in dem Diagramm bei der mittleren Kennlinie ab dem Punkt (F1, p1) gestrichelt ein Übergang auf die obere Kennlinie gezeigt. Diese Betriebsverhalten wird durch Zuschalten der sekundären Servokraft FS2 ab dem Punkt (F1, p1) erreicht. Es findet also eine Umschaltung von dem Gradienten (p2/F2) auf den steileren Gradienten (p3/F3) statt. Dabei kann das Kriterium zur Festlegung des Umschaltpunktes (F1, p1) einzeln oder kombiniert betrachtet unter anderem das Erreichen eines vorbestimmten Bremsdrucks p oder einer vorbestimmten Betätigungskraft FB, das Unterschreiten einer vorbestimmten Fahrzeugverzögerung oder eines vorbestimmten Abstandes zu einem Hindernis, sowie die Überschreiten einer vorbestimmten Zeit ab Einleitung der Fahrzeugbremsung sein.

Das Erkennen des Aussteuerpunktes erfolgt z. B. mit einem Sensor, der den Druck in der Druckkammer 13b oder die Druckdifferenz an der beweglichen Wand 13a mißt. Z. B. kann der Aussteuerpunkt dann als erreicht angesehen werden, wenn der Druck in der Druckkammer 13b dem Druck der äußeren Atmosphäre (Atmosphärendruck) entspricht. In Abwandlung des vorstehend beschriebenen Ausführungsbeispiels kann der Aussteuerpunkt bzw. Knickpunkt auch dadurch erkannt werden, daß in einem Rechner der Verlauf der mittleren Kennlinie gemäß Figur 3 (also der Kennlinie FB + FS1) fortlaufend erfaßt wird, wobei mittels des Sensors 15 die Betätigungskraft FB und mittels des Sensors 16 der Bremsdruck P erfaßt wird. Auf diese Weise kann der Knickpunkt rechnerisch erkannt werden, z. B. über eine Beobachtung der ersten Ableitung der Funktion, die sich an der Knickstelle drastisch ändert. Ab Erreichen des Aussteuerpunktes wird die sekundäre Servokraft FS2 zugeschaltet. Weil der Gradient (p2/F2), der dem Verstärkungsfaktor entspricht, für die Bremsanlage bekannt ist, kann er regelungstechnisch dann auch über den Aussteuerpunkt (Knickpunkt in der mittleren Kurve) hinaus aufrechterhalten werden, indem der Bremsdruck P als Regelgröße herangezogen wird und die Servokraft danach so eingestellt wird, daß die in Figur 3 gezeigte gestrichelte Gerade für den Druck P erreicht wird.

## Patentansprüche

1. Bremsdruckgebervorrichtung (1) für eine hydraulische Fahrzeugbremsanlage,
- die durch Einleiten einer Betätigungskraft (FB) über ein Betätigungselement (2) betätigbar ist, um durch Verkleinern des Volumens einer Hydraulikkammer (4) einen Bremsdruck für wenigstens eine Radbremse (3) zu erzeugen, und
- die mit einem Bremskraftverstärker (13) ausgestattet ist, um der eingeleiteten Betätigungskraft (FB) eine primäre Servokraft (FS1) zu überlagern,
**dadurch gekennzeichnet, daß**
- eine zusätzliche Hydraulikkammer (6) vorgesehen ist, deren Volumen sich bei Einleiten der Betätigungskraft (FB) gleichfalls verkleinert,
- zwischen dem Ausgang der zusätzlichen Hydraulikkammer (6) und der wenigstens einen Radbremse (3) eine Pumpe (10, 10') angeordnet ist, die in Richtung von der zusätzlichen Hydraulikkammer (6) zu der wenigstens einen Radbremse (3) fördert, und
- der Ausgang (10a) der Pumpe (10, 10') mit dem Ausgang der Hydraulikkammer (4) verbunden ist, um der eingeleiteten Betätigungskraft (FB) und/oder der primären Servokraft (FS1) eine sekundäre Servokraft (FS2) zu überlagern, so daß der Bremsdruck für die wenigstens eine Radbremse (3) erhöht wird.

2. Bremsdruckgebervorrichtung nach Anspruch 1, **dadurch gekennzeichnet, daß**
- der Bremskraftverstärker (13) der eingeleiteten Betätigungskraft (FB) eine fest vorgegebene primäre Servokraft (FS1) überlagert.

3. Bremsdruckgebervorrichtung nach Anspruch 1, **dadurch gekennzeichnet, daß**
- der Bremskraftverstärker (13) mittels eines elektrischen Aktuators (14) steuerbar ist, um erstens die Bremsdruckgebervorrichtung anstelle oder zusätzlich zu einer Betätigung über das Betätigungselement (2) zu betätigen und zweitens die primäre Servokraft (FS1) einzustellen.

4. Bremsdruckgebervorrichtung nach einem der Ansprüche 1 bis 3, **dadurch gekennzeichnet, daß**
- die Förderleistung der Pumpe (10, 10') mittels eines elektrischen Aktuators (11, 11') steuerbar ist, um die sekundäre Servokraft (FS2) einzustellen.

5. Bremsdruckgebervorrichtung nach einem der Ansprüche 1 bis 4, **dadurch gekennzeichnet, daß**
- eine Ventileinrichtung (12) vorgesehen ist, durch die in einer ersten Stellung (12.1) eine Fluidverbindung zwischen dem Ausgang der zusätzlichen Hydraulikkammer (6) und dem Ausgang der Hydraulikkammer (4) nur über die Pumpe (10, 10') besteht und in einer zweiten Stellung (12.2) eine eine Fluidverbindung zwischen dem Ausgang der zusätzlichen Hydraulikkammer (6) und dem Ausgang der Hydraulikkammer (4) direkt besteht.

6. Bremsdruckgebervorrichtung nach einem der Ansprüche 1 bis 5, **dadurch gekennzeichnet, daß**
- zu der Hydraulikkammer (4) eine zweite Hydraulikkammer in Serie geschaltet ist, deren Volumen sich beim Betätigen der Bremsdruckgebervorrichtung gleichfalls verkleinert, um einen Bremsdruck für wenigstens eine weitere Radbremse zu erzeugen.

7. Bremsdruckgebervorrichtung nach Anspruch 6, **dadurch gekennzeichnet, daß**
- beim Betätigen der Bremsdruckgebervorrichtung sich das Volumen der zweiten Hydraulikkammer in demgleichen Maße als das Volumen der Hydraulikkammer (4) verkleinert.

8. Bremsdruckgebervorrichtung nach einem der Ansprüche 1 bis 7, **dadurch gekennzeichnet, daß**
- beim Betätigen der Bremsdruckgebervorrichtung sich das Volumen der Hydraulikkammer (4) in einem prozentual geringeren Maße als das Volumen der zusätzlichen Hydraulikkammer (6) verkleinert.

9. Bremsdruckgebervorrichtung nach einem der Ansprüche 1 bis 8, **dadurch gekennzeichnet, daß**
- eine elektronische Steuereinheit (ECU1) vorgesehen ist, die mittels Sensoren (15, 16) zumindest eine mit der Betätigung der Bremsdruckgebervorrichtung in Beziehung stehende Größe erfaßt und auswertet, um in deren Abhängigkeit die elektrischen Aktuatoren (11, 11', 12, 14) anzusteuern.

10. Hydraulische Fahrzeugbremsanlage mit einer Bremsdruckgebervorrichtung nach einem der Ansprüche 1 bis 9, **dadurch gekennzeichnet, daß**
- eine Antiblockier-/Antriebsschlupfregelvorrichtung (20) zwischen der Bremsdruckgebervorrichtung (1) und der Radbremse (3) angeordnet ist, wobei die Pumpe (10') Bestandteil der Antiblockier-/Antriebsschlupfregelvorrichtung (20) ist.

11. Hydraulische Fahrzeugbremsanlage nach Anspruch 10, **dadurch gekennzeichnet, daß** für die Antiblockier-/Antriebsschlupfregelvorrichtung (20) eine elektronische Steuereinheit (ECU2) vorgesehen ist, die mittels Sensoren (17) zumindest eine mit dem dynamischen Verhalten des Fahrzeugs in Beziehung stehende Größe ermittelt, um in deren Abhängigkeit mittels elektrischen Stellgliedern (11' 21, 22) den Bremsdruck in der wenigstens einen Radbremse (3) zu steuern.

12. Hydraulische Fahrzeugbremsanlage nach Anspruch 11, **dadurch gekennzeichnet, daß**
- die elektronische Steuereinheit (ECU1) der Bremsdruckgebervorrichtung (1) und die elektronische Steuereinheit (ECU2) der Antiblockier-/Antriebsschlupfregelvorrichtung (20) über Datenleitungen (18) miteinander kommunizieren oder eine gemeinsame elektronische Steuereinheit (19) für die Bremsdruckgebervorrichtung (1) und die Antiblockier-/Antriebsschlupfregelvorrichtung (20) vorgesehen ist.

13. Verfahren zum Betreiben einer Bremsdruckgebervorrichtung und einer damit ausgestatteten hydraulischen Fahrzeugbremsanlage nach einem der Ansprüche 1 bis 12, **dadurch gekennzeichnet, daß**
dann, wenn
- der Gradient Bremsdruck (p) zu Gesamtbetätigungskraft (F) durch die eingeleitete Betätigungskraft (FB) und/oder die primäre Servokraft (FS1) bestimmt ist,
und
- der Gradient Bremsdruck (p) zu Gesamtbetätigungskraft (F) einen vorgegebenen Gradienten (p2/F2) unterschreitet,
die sekundäre Servokraft (FS2) der eingeleiteten Betätigungskraft (FB) und/oder der primären Servokraft (FS1) in einem solchen Maße überlagert wird, daß der vorgegebene Gradient (p2/F2) zumindest aufrechterhalten wird.

14. Verfahren zum Betreiben einer Bremsdruckgebervorrichtung und einer damit ausgestatteten hydraulischen Fahrzeugbremsanlage nach einem der Ansprüche 1 bis 12, **dadurch gekennzeichnet, daß**
dann, wenn
- der Gradient Bremsdruck (p) zu Gesamtbetätigungskraft (F) durch die eingeleitete Betätigungskraft (FB) und/oder die primäre Servokraft (FS1) bestimmt ist und einem vorgegebenen Gradienten (p2/F2) entspricht,
und
- zumindest eine mit der Betätigung der Bremsdruckgebervorrichtung in Beziehung stehende Größe (p, F) von einem vorgegebenen Wert (p1, F1) abweicht, und/oder
- zumindest eine mit dem dynamischen Verhalten des Fahrzeugs in Beziehung stehende Größe von einem vorgegebenen Wert abweicht,
die sekundäre Servokraft (FS2) der eingeleiteten Betätigungskraft (FB) und/oder der primären Servokraft (FS1) in einem solchen Maße überlagert wird, daß der Gradient Bremsdruck (p) zu Gesamtbetätigungskraft (F) einem weiteren vorgegebenen Gradienten (p3/F3) entspricht, der größer als der vorgegebene Gradient (p2/F2) ist.

15. Verfahren nach Anspruch 13 oder 14, **dadurch gekennzeichnet, daß**
der vorgegebene Gradient (p2/F2) dem Gradienten entspricht, der sich bei maximaler primärer Servokraft (FS1) ergibt.

16. Verfahren nach Anspruch 14 oder 15, **dadurch gekennzeichnet, daß**
der weitere vorgegebene Gradient (p3/F3) dem Gradienten entspricht, der sich bei maximaler primärer Servokraft (FS1) und maximaler sekundärer Servokraft (FS2) ergibt.

## Claims

1. Brake pressure transducer (1) for a hydraulic vehicle brake system
- that is adapted to be actuated by introducing an actuating force (FB) via an actuating element (2) in order to generate a brake pressure for at least one wheel brake (3) by reducing the volume of a hydraulic chamber (4), and
- that is equipped with a brake force booster (13) in order to superimpose a primary servo force (FS1) on the introduced actuating force (FB),
**characterized in that**
- an additional hydraulic chamber (6) is provided whose volume likewise decreases when the actuating force (FB) is introduced,
- between the output of the additional hydraulic chamber (6) and the at least one wheel brake (3) a pump (10, 10') is disposed that pumps in the direction from the additional hydraulic chamber (6) to the at least one wheel brake (3), and
- the output (10a) of the pump (10, 10') is connected to the output of the hydraulic chamber (4) in order to superimpose a secondary servo force (FS2) on the applied actuating force (FB) and/or the primary servo force (FS1) so that the brake pressure is increased for the at least one wheel brake (3).

2. Brake pressure transducer according to Claim 1, **characterized in that**
- the brake force booster (13) superimposes a fixed primary servo force (FS1) on the introduced actuating force (FB).

3. Brake pressure transducer according to Claim 1, **characterized in that**
- the brake force booster (13) can be controlled by means of an electrical actuator (14) in order, firstly, to actuate the brake pressure transducer instead of or in addition to actuation via the actuating element (2) and, secondly, to adjust the primary servo force (FS1).

4. Brake pressure transducer according to one of Claims 1 to 3, **characterized in that**
- the delivery rate of the pump (10, 10') can be controlled by means of an electrical actuator (11, 11') in order to adjust the secondary servo force (FS2).

5. Brake pressure transducer according to one of Claims 1 to 4, **characterized in that**
- a valve device (12) is provided through which, in a first position (12.1), a fluid connection exists between the output of the additional hydraulic chamber (6) and the output of the hydraulic chamber (4) only via the pump (10, 10') and, in a second position (12.2), a fluid connection exists directly between the output of the additional hydraulic chamber (6) and the output of the hydraulic chamber (4).

6. Brake pressure transducer according to one of Claims 1 to 5, **characterized in that**
- there is connected in series with the hydraulic chamber (4) a second hydraulic chamber whose volume likewise decreases when the brake pressure transducer is actuated in order to generate a brake pressure for at least one further wheel brake.

7. Brake pressure transducer according to Claim 6, **characterized in that**
- when the brake pressure transducer is actuated, the volume of the second hydraulic chamber decreases to the same extent as the volume of the hydraulic chamber (4).

8. Brake pressure transducer according to one of Claims 1 to 7, **characterized in that**
- when the brake pressure transducer is actuated, the volume of the hydraulic chamber (4) decreases to a percentagewise lesser extent than the volume of the additional hydraulic chamber (6).

9. Brake pressure transducer according to one of Claims 1 to 8, **characterized in that**
- an electronic control unit (ECU1) is provided that determines and evaluates at least one variable relating to the actuation of the brake pressure transducer by means of sensors (15, 16) in order to activate the electrical actuators (11, 11', 12, 14) as a function thereof.

10. Hydraulic vehicle brake system having a brake pressure transducer according to one of Claims 1 to 9, **characterized in that**
- an anti-locking/drive-slip regulating device (20) is disposed between the brake pressure transducer (1) and the wheel brake (3), the pump (10') being a component of the anti-locking/drive-slip regulating device (20).

11. Hydraulic vehicle brake system according to Claim 10, **characterized in that**, for the anti-locking/drive-slip regulating device (20), an electronic control unit (ECU2) Is provided that determines at least one variable relating to the dynamic behavior of the vehicle by means of sensors (17) in order to control as a function thereof the brake pressure in the at least one wheel brake (3) by means of electrical actuators (11', 21, 22).

12. Hydraulic vehicle brake system according to Claim 11, **characterized in that**
- the electronic control unit (ECU1) of the brake pressure transducer (1) and the electronic control unit (ECU2) of the anti-locking/drive-slip regulating device (20) communicate with one another via data lines (18) or a common electronic control unit (19) is provided for the brake pressure transducer (1) and the anti-locking/drive-slip regulating device (20).

13. Method of operating a brake pressure transducer and a hydraulic vehicle brake system equipped therewith according to one of Claims 1 to 12,
**characterized in that**
if
- the gradient of brake pressure (p) to total actuating force (F) is determined by the initiated actuating force (FB) and/or the primary servo force (FS1),
and
- the gradient of brake pressure (p) to total actuating force (F) drops below a preset gradient (p2/F2), the secondary servo force (FS2) is superimposed on the initiated actuating force (FB) and/or the primary servo force (FS1) to such an extent that the preset gradient (p2/F2) is at least maintained.

14. Method of operating a brake pressure transducer and a hydraulic vehicle brake system equipped therewith according to one of Claims 1 to 12, **characterized in that**
if
- the gradient of brake pressure (p) to total actuating force (F) is determined by the initiated actuating force (FB) and/or the primary servo force (FS1) and is equal to a preset gradient (p2/F2),
and
- at least one variable (p, F) relating to the actuation of the brake pressure transducer differs from a preset value (p1, F1),
and/or
- at least one variable relating to the dynamic behavior of the vehicle differs from a preset value,
the secondary servo force (FS2) is superimposed on the initiated actuating force (FB) and/or the primary servo force (FS1) to such an extent that the gradient of brake pressure (p) to total actuating force (F) is equal to a further preset gradient (p3/F3) that is greater than the preset gradient (p2/F2).

15. Method according to Claim 13 or 14, **characterized in that** the preset gradient (p2/F2) is equal to the gradient that results at maximum primary servo force (FS1).

16. Method according to Claim 14 or 15, **characterized in that** the further preset gradient (p3/F3) is equal to the gradient that results at maximum primary servo force (FS1) and maximum secondary servo force (FS2).

## Revendications

1. Dispositif transmetteur de pression de freinage (1) pour une installation hydraulique de freinage de véhicule
- qui est adapté pour être activé par l'introduction d'une force d'activation (FB) par un élément d'activation (2), pour générer une pression de freinage pour au moins un frein de roue (3) par la réduction du volume d'une chambre hydraulique (4) et
- qui est équipé d'un amplificateur de force de freinage (13) pour superposer à la force d'activation introduite (FB) une force d'asservissement (FS1) primaire,
**caractérisé**
- **en ce qu'**il est prévu une chambre hydraulique supplémentaire (6) dont le volume se réduit aussi lors de l'introduction de la force d'activation (FB),
- qu'entre la sortie de la chambre hydraulique supplémentaire (6) et au moins un frein de roue (3) est disposée une pompe (10, 10') qui refoule dans la direction allant de la chambre hydraulique supplémentaire (6) à au moins un frein de roue (3), et
- que la sortie (10a) de la pompe (10, 10') est reliée avec la sortie de la chambre hydraulique (4) pour superposer à la force d'activation (FB) introduite et/ou à la force d'asservissement primaire (FS1) une force d'asservissement secondaire (FS2), de sorte que la pression de freinage est augmentée au moins pour un frein de roue (3).

2. Dispositif transmetteur de pression de freinage selon la revendication 1, **caractérisé**
- **en ce que** l'amplificateur de force de freinage (13) superpose à la force d'activation introduite (FB) une force d'asservissement primaire (FS1) prédéfinie fixe.

3. Dispositif transmetteur de pression de freinage selon la revendication 1, **caractérisé**
- **en ce que** l'amplificateur de force de freinage (13) est adapté pour être commandé au moyen d'un actionneur électrique (14) premièrement pour activer le dispositif transmetteur de pression de freinage à la place ou en plus d'une activation par l'élément d'activation (2) et deuxièmement pour régler la force d'asservissement primaire (FS1).

4. Dispositif transmetteur de pression de freinage selon une des revendications 1 à 3, **caractérisé**
- **en ce que** la puissance de refoulement de la pompe (10,10') est commandable au moyen d'un actionneur électrique (11, 11') pour régler la force d'asservissement secondaire (FS2).

5. Dispositif transmetteur de pression de freinage selon l'une des revendications 1 à 4, **caractérisé**
- **en ce qu'**il est prévu un dispositif de soupape (12) grâce auquel il existe dans une première position (12.1) une liaison de fluide entre la sortie de la chambre hydraulique supplémentaire (6) et la sortie de la chambre hydraulique (4) uniquement via la pompe (10, 10') et il existe dans une deuxième position (12.2) une liaison de fluide directe entre la sortie de la chambre hydraulique supplémentaire (6) et la sortie de la chambre hydraulique (4).

6. Dispositif transmetteur de pression de freinage selon l'une des revendications 1 à 5, **caractérisé**
- **en ce qu'**à la chambre hydraulique (4) est connectée en série une deuxième chambre hydraulique dont le volume se réduit aussi lors de l'activation du dispositif transmetteur de pression de freinage pour générer une pression de freinage pour au moins un autre frein de roue.

7. Dispositif transmetteur de pression de freinage selon la revendication 6, **caractérisé**
- **en ce que** lors de l'activation du dispositif transmetteur de pression de freinage, le volume de la deuxième chambre hydraulique se réduit dans la même mesure que le volume de la chambre hydraulique (4).

8. Dispositif transmetteur de pression de freinage selon l'une des revendications 1 à 7, **caractérisé**
- **en ce que** lors de l'activation du dispositif transmetteur de pression de freinage, le volume de la chambre hydraulique (4) se réduit proportionnellement moins que le volume de la chambre hydraulique supplémentaire (6).

9. Dispositif transmetteur de pression de freinage selon l'une des revendications 1 à 8, **caractérisé**
- **en ce qu'**il est prévu une unité de commande électronique (ECU1) qui, au moyen de capteurs (15, 16), saisit et analyse au moins une grandeur en relation avec l'activation du dispositif transmetteur de pression de freinage afin de commander en fonction de celle-ci les actionneurs électriques (11, 11', 12, 14).

10. Installation hydraulique de freinage de véhicule avec un dispositif transmetteur de pression de freinage selon l'une des revendications 1 à 9, **caractérisée**
- **en ce qu'**un dispositif de régulation antiblocage/antipatinage (20) est disposé entre le dispositif transmetteur de pression de freinage (1) et le frein de roue (3), la pompe (10') faisant partie du dispositif de régulation antiblocage/antipatinage (20).

11. Installation hydraulique de freinage de véhicule selon la revendication 10, **caractérisée**
- **en ce que** pour le dispositif de régulation antiblocage/antipatinage (20), il est prévu une unité de commande électronique (ECU2) qui, au moyen de capteurs (17), détermine au moins une grandeur en relation avec le comportement dynamique du véhicule, afin de commander en fonction de celle-ci, au moyen d'organes de réglage électriques (11', 21, 22), la pression de freinage dans au moins un frein de roue (3).

12. Installation hydraulique de freinage de véhicule selon la revendication 11, **caractérisée**
- **en ce que** l'unité de commande électronique (ECU1) du dispositif transmetteur de pression de freinage (1) et l'unité de commande électronique (ECU2) du dispositif de régulation antiblocage/antipatinage (20) communiquent entre elles par des lignes de données 18 ou qu'il est prévu une unité de commande électronique (19) commune pour le dispositif transmetteur de pression de freinage (1) et le dispositif de régulation antiblocage/antipatinage (20).

13. Procédé de fonctionnement d'un dispositif transmetteur de pression de freinage et d'une installation hydraulique de freinage de véhicule équipé de celui-ci selon l'une des revendications 1 à 12, **caractérisé en ce que**,
lorsque
- le gradient de la pression de freinage (p) par rapport à la force d'activation totale (F) est déterminé par la force d'activation introduite (FB) et/ou la force d'asservissement primaire (FS1),
et que
- le gradient de la pression de freinage (p) par rapport à la force d'activation totale (F) devient inférieur à un gradient prédéfini (p2/F2),
la force d'asservissement secondaire (FS2) est superposée à la force d'activation introduite (FB) et/ou à la force d'asservissement primaire (FS1) dans une mesure telle que le gradient prédéfini (p2/F2) est au moins maintenu.

14. Procédé de fonctionnement d'un dispositif transmetteur de pression de freinage et d'une installation hydraulique de freinage de véhicule équipé de celui-ci selon l'une des revendications 1 à 12, **caractérisé en ce que**,
lorsque
- le gradient de la pression de freinage (p) par rapport à la force d'activation totale (F) est déterminé par la force d'activation introduite (FB) et/ou par la force d'asservissement primaire (FS1) et correspond à un gradient prédéfini (p2/F2),
et que
- au moins une grandeur en relation avec l'activation du dispositif transmetteur de pression de freinage (p, F) s'écarte d'une valeur prédéfinie (p1, F1),
et/ou
- au moins une grandeur en relation avec le comportement dynamique du véhicule s'écarte d'une valeur prédéfinie,
la force d'asservissement secondaire (FS2) est superposée à la force d'activation introduite (FB) et/ou à la force d'asservissement primaire (FS1) dans une mesure telle que le gradient de la pression de freinage (p) par rapport à la force d'activation totale (F) correspond à un autre gradient prédéfini (p3/F3) qui est supérieur au gradient prédéfini (p2/F2).

15. Procédé selon l'une des revendications 13 ou 14, **caractérisé en ce que** le gradient prédéfini (p2/F2) correspond au gradient qui résulte de la force d'asservissement primaire (FS1) maximale.

16. Procédé selon l'une des revendications 14 ou 15, **caractérisé en ce que** l'autre gradient prédéfini (p3/F3) correspond au gradient qui résulte de la force d'asservissement primaire (FS1) maximale et de la force d'asservissement secondaire (FS2) maximale.
